# EUROPEAN PATENT APPLICATION

(11) **EP 1 474 972 A1**
(43) Date of publication of application: **10.11.2004**
(21) Application number: 04102001.7
(22) Date of filing: 07.05.2004
(51) Int. Cl.: A01K 61/00, A22C 29/04

(54) **Shellfish cleaning container**

(30) Priority: 09.05.2003 IT BO20030284
(71) Applicant: TECNO IMPIANTI DI GABELLINI GREGORIO, 47838 RIMINI (IT)
(72) Inventor: Gabellini, Gregorio, 47888 Riccione (IT)
(74) Representative: Jorio, Paolo, Dr. Ing.

(57) **Abstract**

A container for cleaning shellfish (2) is substantially cup-shaped, is supplied with a liquid solution, and has a hydraulic circuit (17) for draining the liquid solution along at least one vertical tubular post (7) open at the top end (9a) and the bottom end (9b); the hydraulic circuit (17) being defined by a first conduit (18), which communicates with the container and is located between a bottom wall (6) of the container and a grille (11) supporting the shellfish (2), and by a second conduit (20) extending inside the post (7) and communicating with the first conduit (18) and the post (7).

## Description

The present invention relates to a shellfish cleaning container.

More specifically, the present invention relates to a shellfish cleaning container which is substantially cup-shaped, and comprises a substantially horizontal bottom wall; a number of vertical posts, each connected to each of the two adjacent posts by a lateral boundary wall; a supporting wall for supporting the shellfish and substantially parallel to the bottom wall; and a connecting sleeve located between the bottom wall and the supporting wall, and which is connected to a supply conduit for feeding a liquid solution into the container.

At least one of the posts is a tubular post having an open top end, an open bottom end, and a slit facing inwards of the container. When the level of the liquid solution inside the container reaches the slit, the liquid solution is drained from the container firstly into the tubular post, and then into a catch channel or into a corresponding tubular post of another container underneath the one considered.

Known shellfish cleaning containers of the type described above have various drawbacks, mainly due to the supply conduit being connected manually to the connecting sleeve.

It is an object of the present invention to provide a shellfish cleaning container designed to eliminate the aforementioned drawbacks, and which is cheap and easy to produce.

According to the present invention, there is provided a shellfish cleaning container, as claimed in Claim 1.

A non-limiting embodiment of the present invention will be described by way of example with reference to the accompanying drawings, in which:
Figure 1 shows a schematic side view, with parts in section and parts removed for clarity, of a shellfish cleaning system featuring a preferred embodiment of the container according to the present invention;
Figure 2 shows a schematic plan view of a Figure 1 container.

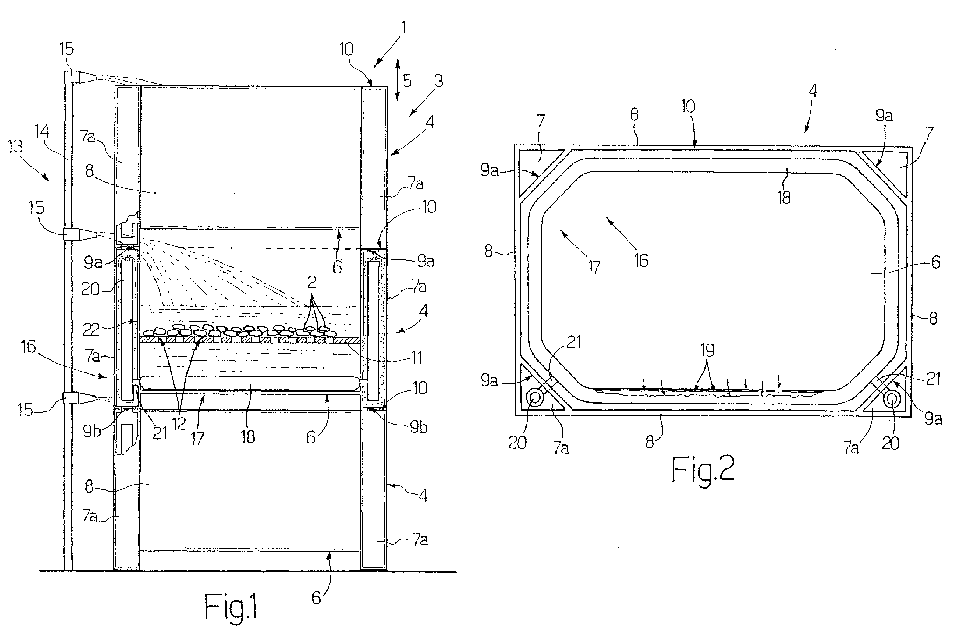

With reference to Figures 1 and 2, number 1 indicates as a whole a system for cleaning shellfish 2 and comprising, in the example shown, a stack 3 of containers 4 (three containers 4 in the example shown) stacked in a substantially vertical direction 5.

Each container 4 is substantially cup-shaped with its concavity facing upwards, is bounded at the bottom by a substantially horizontal bottom wall 6 perpendicular to direction 5, and comprises a number of (in the example shown, four) vertical posts 7, each of which extends in direction 5 and is connected to each of the two adjacent posts 7 by a lateral boundary wall 8 substantially perpendicular to wall 6 and to the other walls 8. Each post 7 is a tubular post, is aligned in direction 5 with at least one corresponding post 7 of an adjacent container 4, and is open in direction 5 at a top end 9a and a bottom end 9b.

Container 4 opens outwards at a flat surface 10 substantially parallel to wall 6 and separated from wall 6 by a distance, measured parallel to direction 5, less than the length of a post 7, also measured parallel to direction 5.

Container 4 also comprises a plate 11, which supports shellfish 2, is parallel to and located a given distance from wall 6, and has a number of openings 12 formed, parallel to direction 5, through plate 11.

Containers 4 in stack 3 are associated with a supply device 13 for feeding a liquid solution - in the example shown, water - into containers 4, and which comprises a tubular rod 14 extending in direction 5, defining a water supply conduit, and supporting, for each container 4, a supply nozzle 15 located entirely outside relative container 4 and between surface 10 of relative container 4 and wall 6 of the adjacent container 4.

System 1 also comprises a drain device 16 for draining the water from containers 4. Device 16 comprises, for each container 4, a hydraulic circuit 17, in turn comprising a closed-loop conduit 18 located between relative wall 6 and relative plate 11, and having a number of holes 19 through which water flows into conduit 18.

Circuit 17 also comprises a number of (in the example shown, two) further conduits 20 extending in direction 5 and located inside relative posts 7 (hereinafter indicated 7a). Each conduit 20 has a top end open in direction 5 to enable conduit 20 to communicate with relative post 7a, and communicates with conduit 18 by means of a fitting 21 extending through relative post 7a and crosswise to conduit 20.

Each group of posts 7a aligned in direction 5 defines a drain column 22 forming part of drain device 16 and connecting circuits 17 to a water catch channel (not shown) extending beneath stack 3 and crosswise to columns 22.

In actual use, water is fed into each container 4 by relative supply nozzle 15, and flows firstly through relative supporting plate 11, then through relative holes 19 into relative conduit 18, and finally through relative fittings 21 into relative conduits 20.

When conduits 20 are full, the water flows out of conduits 20 into drain columns 22, and along columns 22 to the catch channel (not shown).

System 1 therefore has various advantages, mainly due to each container 4 being removable from and insertable in stack 3 with no manual work required to connect container 4 hydraulically to supply device 13.

## Claims

1. A container for cleaning shellfish (2), the container being supplied with a liquid solution, and comprising a substantially horizontal bottom wall (6); a lateral boundary wall (8); at least one substantially vertical tubular post (7) located along said lateral wall (8) and having an open top end (9a) and an open bottom end (9b); a supporting wall (11) for supporting the shellfish (2), and which is substantially parallel to said bottom wall (6) and has at least one first opening (12) for passage of said liquid solution; and a hydraulic circuit (17) for draining the liquid solution from the container; and being **characterized in that** said hydraulic circuit (17) comprises at least one first conduit (18) located between said bottom wall and said supporting wall (6, 11) and having at least one second opening (19) through which said liquid solution flows into the first conduit (18); and at least one second conduit (20) extending inside said post (7) and communicating with both the first conduit (18) and the post (7).

2. A container as claimed in Claim 1, wherein said first conduit (18) is a closed-loop conduit.

3. A container as claimed in Claim 1 or 2, wherein said hydraulic circuit (17) also comprises a third conduit (21) connecting said first and said second conduit (18, 20) to each other.

4. A container as claimed in any one of the foregoing Claims, wherein the container opens outwards at a substantially flat surface (10) parallel to said bottom wall (6), and comprises at least three said posts (7), each of which is of a length greater than a distance between said surface (10) and the bottom wall (6).

5. A system for cleaning shellfish (2), and comprising a stack (3) of containers (4) stacked in a substantially vertical direction (5); and supply means (13) for feeding a liquid solution into each container (4); each container (4) comprising a substantially horizontal bottom wall (6); a lateral boundary wall (8); at least one substantially vertical tubular post (7) located along said lateral wall (8), having an open top end (9a) and an open bottom end (9b), and aligned in said direction (5) with a corresponding post (7) of at least one adjacent container (4); a supporting wall (11) for supporting the shellfish (2), and which is substantially parallel to said bottom wall (6) and has at least one first opening (12) for passage of said liquid solution; and a hydraulic circuit (17) for draining the liquid solution from the container (4); and **characterized in that** said hydraulic circuit (17) comprises at least one first conduit (18) located between said bottom wall and said supporting wall (6, 11) and having at least one second opening (19) through which said liquid solution flows into the first conduit (18); and at least one second conduit (20) extending inside said post (7) and communicating with both the first conduit (18) and the post (7).

6. A system as claimed in Claim 5, and also comprising a drain device (16) for draining said liquid solution from the containers (4); the drain device (16) comprising said hydraulic circuits (17), and at least one drain column (22) defined by said posts (7).

7. A system as claimed in Claim 5 or 6, wherein said supply means (13) comprise, for each container (4), a supply nozzle (15) located outside the container (4).

8. A system as claimed in Claim 7, wherein each container (4) opens outwards at a substantially flat surface (10) parallel to the relative bottom wall (6), and comprises at least three said posts (7), each of which is of a length greater than a distance between said surface (10) and the bottom wall (6); the relative supply nozzle (15) being located above said surface (10).

9. A system as claimed in any one of Claims 5 to 8, wherein said first conduit (18) is a closed-loop conduit.

10. A system as claimed in any one of Claims 5 to 9, wherein said hydraulic circuit (17) also comprises a third conduit (21) connecting said first and said second conduit (18, 20) to each other.
